# EUROPÄISCHE PATENTSCHRIFT

(11) **EP 0 778 791 B1**
(45) Veröffentlichungstag und Bekanntmachung des Hinweises auf die Patenterteilung: **27.01.1999**
(21) Anmeldenummer: 95920888.5
(22) Anmeldetag: 23.05.1995
(51) Int. Cl.: B01D 39/16

(54) **FILTERELEMENT MIT FASERBESCHICHTUNG**
FIBRE-COATED FILTER ELEMENT
ELEMENT DE FILTRAGE A REVETEMENT FIBREUX

(30) Priorität: 24.05.1994 DE 4418033
(43) Veröffentlichungstag der Anmeldung: 18.06.1997
(73) Patentinhaber: Herding GmbH Filtertechnik, 92224 Amberg (DE)
(72) Erfinder: HERDING, Walter, D-92226 Hahnbach (DE)
(74) Vertreter: Klunker . Schmitt-Nilson . Hirsch
(86) Internationale Anmeldenummer: EP9501990
(87) Internationale Veröffentlichungsnummer: WO9532047

(56) Entgegenhaltungen:
- WO-A-87/01610
- WO-A-94/09880
- FR-A- 2 224 192
- US-A- 4 212 733

## Beschreibung

Die Erfindung bezieht sich auf ein Filterelement, aufweisend einen eigenstabilen, porösen Tragkörper und eine im Vergleich zu dem Tragkörper feiner poröse Faserbeschichtung des Tragkörpers an dessen Zuströmoberfläche für zu filterndes Fluid, wobei die Faserbeschichtung teils durch Faser/Faser-Bindung und teils durch Faser/Tragkörper-Bindung an den Tragkörper gebunden ist.

Bei einem bekannten Filterelement dieser Art (WO 87/01610) besteht die Faserbeschichtung aus Fasern, die erheblich länger als die durchschnittliche Porengröße des Tragkörpers sind, und in der Faserbeschichtung verteilten, an die Fasern gebundenen Feinkornpartikeln. Bei den Arbeiten im Zusammenhang mit der Erfindung wurde gefunden, daß die Schaffung eines derartigen Filterelements mit gutem Feinfiltrationsvermögen allerdings eine Faserbeschichtung mit ziemlich großer Dicke erfordert; dies steigert den Druckverlust, den das zu filternde Medium beim Durchströmen des Filterelements erleidet.

US-A-4,212,733 offenbart einen Filter mit einer ersten Filterschicht aus einem porösen Basismaterial und einer daran gebundenen zweiten Filterschicht aus Fasermaterial, wobei das Basismaterial gesintertes Polyethylen-Pulver enthält und die Fasern der zweiten Filterschicht einen Wassergehalt von etwa 0,4 bis etwa 5%, eine kritische Oberflächenspannung von etwa 25 bis etwa 45 dyn/cm und einen Faserdurchmesser von etwa 5 bis etwa 30 µm aufweisen. Zusätzlich können Fasern mit einem Wassergehalt von etwa 8 bis etwa 15% vorhanden sein.

FR-A-2 224 192 offenbart eine Filterzusammensetzung für Gase auf der Basis eines porösen, gegebenenfalls fasrigen Materials. Elektrisch leitfähige, submikroskopische Partikel sind in das poröse Material inkorporiert oder darauf abgeschieden.

WO 94/09880 offenbart ein Filterelement mit einer großporigen inneren Schicht und einer kleinporigen äußeren Schicht, wobei beide Schichten Fasern aufweisen und mit einem Harz imprägniert und miteinander verbunden sind.

Der Erfindung liegt die Aufgabe zugrunde, ein Filterelement der eingangs genannten Art verfügbar zu machen, das sich durch einen guten Kompromiß zwischen dem jeweils gewünschten Grad von Feinfiltrationsvermögen und geringem Druckverlust für das hindruchströmende, zu filternde Medium beim Einsatz des Filterelements auszeichnet.

Die Lösung dieser Aufgabe wird nachfolgend beschrieben.

Das Filterelement ist dadurch gekennzeichnet, daß die Faserbeschichtung erste Fasern aufweist, deren Länge größer als die durchschnittliche Porengröße des Tragkörpers ist, und zweite Fasern aufweist, deren Länge zur Schaffung der Feinporosität der Faserbeschichtung deutlich geringer als die Länge der ersten Fasern ist.

Hierdurch wird das Prinzip verwirklicht, die Räume zwischen den ersten Fasern mit den kürzeren zweiten Fasern aufzufüllen bzw. zu überdecken.

Die ersten Fasern haben in der Regel eine Länge, die deutlich größer als die durchschnittliche Porengröße des Tragkörpers ist, insbesondere mehr als doppelt so groß ist wie die durchschnittliche Porengröße des Tragkörpers. Die zweiten Fasern haben in der Regel eine Länge, die kleiner als die durchschnittliche Porengröße des Tragkörpers ist, insbesondere weniger als halb so groß ist wie die durchschnittliche Porengröße des Tragkörpers. Die Faserbeschichtung enthält vorzugsweise - in Gewichtsanteil gemessen - mehr zweite Fasern als erste Fasern, wobei das Gewichtsverhältnis von zweiten Fasern zu ersten Fasern besonders bevorzugt größer als 2:1 ist. Vorzugsweise handelt es sich bei den ersten Fasern und den zweiten Fasern um Fasern aus dem gleichen Material und/oder um Fasern in etwa gleicher Durchmesserklasse. Häufig ist es ausreichend, wenn weniger als 10 % Gewichtsanteil der Faserbeschichtung erste Fasern sind.

Etwaige, in der Faserbeschichtung verteilt enthaltene, feinkörnige Partikel sind bevorzugt mit unter 30 Gew.-%, vorzugsweise mit unter 20 Gew.-%, stärker bevorzugt mit unter 10 Gew.-%, am meisten bevorzugt mit 0 bis 3 Gew.-%, jeweils bezogen auf das Gesamtgewicht von Fasern und feinkörnigen Partikeln, enthalten.

Hiermit wird ein gegenüber dem einschlägigen Stand der Technik (WO 87/01610) konträrer Weg beschritten, indem der Anteil von in der Faserbeschichtung verteilt enthaltenen, feinkörnigen Partikeln sehr erheblich verringert wird, im Extremfall sogar auf Null oder nahe Null verringert wird. Das Feinfiltrationsvermögen im gewünschten Grad wird also im wesentlichen durch die Fasern und nicht durch in der Faserbeschichtung verteilt enthaltene, feinkörnige Partikel geleistet.

Die Erfindung läßt sich bei Filterelementen aus einer Vielzahl von Materialien verwirklichen. Was den Tragkörper anlangt, werden Kunststoff- bzw. Kunstharzmaterialien, keramische Materialien und metallische Materialien besonders hervorgehoben. Um den porösen Tragkörper rationell zu erzeugen, können Teilchen der genannten Materialien miteinander versintert oder durch andere Bindungsmechanismen, wie Benutzung eines Bindemittels, miteinander verbunden sein. Was das Material der Fasern anlangt, sind keramische Fasern, insbesondere aus Aluminiumsilikat, bevorzugt. Man kann aber auch mit anderen Fasern, z.B. Glasfasern, natürlichen Fasern, synthetischen organischen Fasern und anderes mehr arbeiten. Für die Erzeugung der Faser/Faser-Bindung und der Faser/Tragkörper-Bindung gibt es eine ganze Reihe von Möglichkeiten, insbesondere Sintern, Einsatz eines Klebstoffs oder Bindemittels und anderes mehr.

Vorzugsweise sind die ersten Fasern als erste Faserbeschichtungslage aufgebracht und die zweiten Fasern darauf als zweite Beschichtungslage aufgebracht. Hierbei kommt es häufig dazu, daß die zweiten Fasern zum Teil in die Räume zwischen den ersten Fasern der ersten Faserbeschichtungslage eindringen, so daß im fertigen Zustand keine klare Grenze zwischen der ersten Faserbeschichtungslage und der zweiten Faserbeschichtungslage mehr besteht. Alternativ ist es möglich, die ersten Fasern und die zweiten Fasern gemischt in einem Schritt aufzubringen.

Vorzugsweise sind mehrere Faserbeschichtungslagen mit vom Tragkörper weg zunehmender Feinheit der Porosität aufgebracht. Diese Ausgestaltung des Filterelements wird auch durch die im letzten Absatz angesprochene Faserbeschichtung mit erster Faserbeschichtungslage und zweiter Faserbeschichtungslage verwirklicht. Die jetzt angesprochene Ausgestaltungsmöglichkeit zielt allerdings darauf ab, auf die erste Faserbeschichtung (die erste und zweite Fasern, sei es in einer gemeinsamen Beschichtungslage, sei es in zwei nacheinander aufgebrachten Beschichtungslagen, aufweist) mindestens eine weitere Faserbeschichtungslage mit einer feineren Porosität aufzubringen. Dies geschieht vorzugsweise unter Einsatz von im Vergleich zur ersten Faserbeschichtung kürzeren und/oder dünneren Fasern, gegebenenfalls auch unter Einsatz von Fasern aus anderem Material. Die mindestens eine weitere Faserbeschichtungslage muß normalerweise nicht mehr erste Fasern und zweite Fasern aufweisen; die darunter befindliche, erste Faserbeschichtung stellt eine ideale Grundlage zur Aufbringung der mindestens einen weiteren Faserbeschichtungslage dar.

In bevorzugter Ausgestaltung der Erfindung weist das Filterelement außenseitig auf der Faserbeschichtung eine Beschichtungslage aus feinkörnigen Partikeln auf. Diese Partikeln sind vorzugsweise so klein, daß diese Beschichtungslage das Feinfiltrationsvermögen des Filterelements im wesentlichen bestimmt. Für die feinkörnigen Partikel besteht eine breite Materialauswahlmöglichkeit; sie können insbesondere Kunststoffpartikel oder anorganische Partikel sein. Eine besonders bevorzugte Auswahlmöglichkeit wird weiter unten noch genauer angesprochen. Die feinkörnigen Partikel können aneinander und an die Faserbeschichtung derart gebunden sein, wie es weiter vorn für die Bindung der Teilchen des Tragskörpers und die Faser/Faser-Bindung bzw. die Faser/Tragkörper-Bindung der Faserbeschichtung beschrieben worden ist.

Das Aufbringen einer Beschichtungslage aus feinkörnigen Partikeln auf eine Faserbeschichtung ist eine bevorzugte Weiterbildung der Erfindung.

Das Filterelement, das einen eigenstabilen, porösen Tragkörper und eine im Vergleich zu dem Tragkörper feiner poröse Faserbeschichtung des Tragkörpers an dessen Zuströmoberfläche für zu filterndes Fluid aufweist, wobei die Faserbeschichtung teils durch Faser/Faser-Bindung und teils durch Faser/Tragkörper-Bindung an den Tragkörper gebunden ist, kann dadurch hergestellt werden,
daß die Fasern für die Bildung der Faserbeschichtung im Trockenzustand an der Zuströmoberfläche des Tragkörpers, vorzugsweise mittels eines Luftstroms, aufgebracht werden, wobei ein Klebstoff zur Schaffung der Faser/Faser-Bindung und der Faser/Tragkörper-Bindung zuvor auf die Zuströmoberfläche aufgebracht worden ist und/oder nach dem Aufbringen mindestens eines Teils der Fasern aufgebracht wird.

Wenn Klebstoff vor den Fasern aufgebracht wird, bleiben die aufgebrachten Fasern unter Mitwirkung des Klebstoffs an dem Tragkörper hängen. Da andererseits den Fasern eine Tendenz für einen gewissen gegenseitigen Zusammenhalt innewohnt, was zu einer vorläufigen Haftung an dem Tragkörper auch ohne Klebstoff führt, ist es auch möglich, den Klebstoff nachträglich aufzubringen.

Das Filterelement, das einen eigenstabilen, porösen Tragkörper und eine im Vergleich zu dem Tragkörper feiner poröse Faserbeschichtung des Tragkörpers an dessen Zuströmoberfläche für zu filterndes Fluid aufweist, wobei die Faserbeschichtung teils durch Faser/Faser-Bindung und teils durch Faser/Tragkörper-Bindung an den Tragkörper gebunden ist, kann auch dadurch hergestellt werden,
daß die Fasern für die Bildung der Faserbeschichtung in einer Flüssigkeit dispergiert oder suspendiert an der Zuströmoberfläche des Tragkörpers aufgebracht werden, wobei ein Klebstoff zur Schaffung der Faser/Faser-Bindung und der Faser/Tragkörper-Bindung zuvor auf die Zuströmoberfläche aufgebracht worden ist und/oder nach dem Aufbringen mindestens eines Teils der Fasern aufgebracht wird und/oder in der Trägerflüssigkeit enthalten ist.

Im Unterschied zu dem zuvor geschilderten Verfahren werden die Fasern also gleichsam im nassen Zustand aufgebracht, was in vielen Fällen besonders rationell ist. Als besonders geeignete, einfache Möglichkeiten der Aufbringung der Fasern-in-Flüssigkeit-Dispersion oder -Suspension seien das Aufsprühen, das Aufstreichen, das Aufrollen, aber auch das Eintauchen des Tragkörpers in die Dispersion oder die Suspension genannt.

Die Herstellungsverfahren sind nicht Gegenstand der Erfindung.

Es wird darauf hingewiesen, daß der Begriff "Klebstoff" im Rahmen der Erfindung in einem sehr umfassenden Sinn zu verstehen ist. Hierunter sollen alle Materialien verstanden werden, die eine für den Betrieb des Filterelements ausreichend feste Haftung der Fasern aneinander und an dem Tragkörper leisten, insbesondere Klebstoffe im engeren Sinn, Kunststoffe bzw. Kunstharze, welche die genannte Bindung zu erzeugen vermögen, organische oder anorganische Bindemittel wie Natronwasserglas. Es wird ausdrücklich darauf hingewiesen, daß bei den erfindungsgemäßen Verfahren alternativ auch mit anderen Bindungsmechanismen Faser/Faser und Faser/Tragkörper gearbeitet werden kann, insbesondere mit dem Sintern. Es versteht sich, daß der Klebstoff oder das Bindemittel so gewählt und in derartiger Menge verwendet wird, daß die funktionserforderlichen Poren bzw. Durchströmungspassagen zwischen den Fasern nicht verschlossen werden.

Wie weiter vorn schon angesprochen, werden vorzugsweise mehrere Faserbeschichtungslagen mit vom Tragkörper weg zunehmender Feinheit der Porosität aufgebracht, und zwar normalerweise nacheinander, Jede der Faserbeschichtungslagen kann nach einem der beschriebenen, Verfahren aufgebracht werden.

Auf die Faserbeschichtung kann eine Beschichtungslage aus feinkörnigen Partikeln aufgebracht werden.

Weitere Ausführungen zu dieser Beschichtungslage aus feinkörnigen Partikeln sind weiter vorn bereits gemacht worden. Die Verfahren zur Aufbringung der Partikel sind nicht Gegenstand der Erfindung.

In weiterer Ausgestaltung der Erfindung wird die Beschichtungslage aus feinkörnigen Partikeln unter Verwendung solcher Partikel aufgebracht, die beim beabsichtigten Betriebseinsatz des Filterelements aus einem Fluidstrom ausgefiltert werden sollen. Wenn man zum Beispiel ein erfindungsgemäßes Filterelement zum Entfernen des Gesteinsstaubs verwenden will, der beim Betrieb einer Zerkleinerungsanlage anfällt, kann man diesen Gesteinsstaub, der z.B. mittels irgendeines Filters ausgefiltert worden ist, zur Erzeugung der Beschichtungslage aus feinkörnigen Partikeln bei der Herstellung eines erfindungsgemäßen Filterelements verwenden.

Beim Aufbringen der Fasern und/oder der feinkörnigen Partikel kann mit einem Saugluftstrom von der Zuströmoberfläche des Tragkörpers weg durch diesen hindurch gearbeitet werden. Mittels des Saugluftstroms werden die Fasern und/oder die feinkörnigen Partikel gezielt dorthin geleitet, wo sie die Faserbeschichtung bilden sollen.

Das Arbeiten mit einem Saugluftstrom gibt die bevorzugte Möglichkeit, in dem Saugluftstrom, nachdem er den Tragkörper passiert hat, die Konzentration und/oder die Größe von mitgeführten Fremdstoffpartikeln zu erfassen und die Aufbringung der Fasern und/oder der feinkörnigen Partikel in Abhängigkeit von dieser Erfassung zu beenden, insbesondere sobald die Konzentration und/oder die Größe der hinter dem Tragkörper noch enthaltenen Fremdstoffpartikel einen bestimmten Schwellenwert unterschritten hat. Man kann also Filterelemente gleichsam mit einem Abscheidegrad bzw. einer Abscheidefeinheit nach Maß, z.B. abhängig von der Filtrieraufgabe, für die das betreffende Filterelement bestimmt ist, herstellen. Bei Erfassung der Konzentration der Fremdstoffpartikel hinter dem Tragkörper kann man diese auch in Relation zur erfaßten Konzentration von mitgeführten Fremdstoffpartikeln vor der Zuströmung zu dem Filterelement setzen.

Eine ganz besonders günstige Möglichkeit besteht darin, die beschriebene Erfassung der Konzentration und/oder der Größe von mitgeführten Fremdstoffpartikeln im Fall der Aufbringung einer Beschichtungslage aus feinkörnigen Partikeln unter Verwendung solcher Partikel, die beim beabsichtigten Betriebseinsatz des Filterelements aus einem Fluidstrom ausgefiltert werden sollen, durchzuführen. Dies führt in perfekter Weise zu einem Filterelement mit einer Abscheidefeinheit nach Maß (sicheres Erreichen der geforderten Abscheidefeinheit, aber nicht unnötig weit getriebene Abscheidefeinheit) und deshalb Vermeidung der Herstellung eines Filterelements mit zu hohem Druckverlust. Wenn man für die Beschichtungslage aus feinkörnigen Partikeln solche Partikel verwendet, die beim beabsichtigten Betriebseinsatz des Filterelements aus einem Fluidstrom ausgefiltert werden sollen, ist man mit der Erfassung der Konzentration und/oder der Größe der mitgeführten Fremdstoffpartikel (z.B. erfaßt als weniger als x mg/m³ gefilterte Luft verbleibende Fremdstoffpartikel unter 1 µm Größe) perfekt richtig, weil man die Aufbringung der Beschichtungslage exakt dann gestoppt hat, wenn sie die hierfür erforderliche Dicke hat.

Statt der Erfassung der Konzentration und/oder der Größe von mitgeführten Fremdstoffpartikeln hinter dem Tragkörper oder zusätzlich hierzu kann man den Druckverlust erfassen, den der Saugluftstrom beim Passieren des im Aufbau der Beschichtung befindlichen Filterelements erleidet. Dieser Druckverlust ist ein indirektes Maß dafür, wie weit der Beschichtungsvorgang fortgeschritten ist, bzw. dafür, ob man eine Faserbeschichtung mit für den betreffenden Fall hinreichender Filtrierwirksamkeit erzeugt hat.

Man kann auf die Zuströmoberfläche des Tragkörpers eine Antistatik-Beschichtung, vorzugsweise aus Rußpartikeln, aufbringen, ehe die Fasern aufgebracht werden. Die antistatisch wirkenden Partikel können insbesondere als Dispersion oder Suspension aufgebracht werden. Für die Anbindung der antistatisch wirkenden Partikel gilt analog das, was zur Anbindung der Fasern ausgeführt worden ist.

Die erfindungsgemäßen Filterelemente sind in erster Linie zur Feinfiltration von Gasen und Luft, insbesondere bei der Entstaubuung von Luft in Fabrikationshallen an Produktionsmaschinen und bei Verfahrensschritten, bestimmt, können aber auch zum Filtrieren von Flüssigkeiten eingesetzt werden. Bei entsprechender Materialwahl können aber auch heiße Gase, wie Verbrennungsabgase, und heiße Flüssigkeiten gefiltert werden.

Beim erfindungsgemäßen Filterelement liegen typische durchschnittliche Porengrößen des Tragkörpers im Bereich von 10 bis 100 µm, typische Faserdurchmesser liegen im Bereich von 0,5 bis 8 µm. Es wird darauf hingewiesen, daß es aufgrund des erfindungsgemäßen Aufbaus der Faserbeschichtung möglich ist, mit einer vergleichsweise großen durchschnittlichen Porengröße des Tragkörpers zu arbeiten, weil eine sichere Überbrückung der offenen Poren des Tragkörpers an der Zuströmoberfläche möglich ist, zugleich - wie bereits eingangs geschildert - eine Ausbildung der Beschichtung mit sehr feiner Porengröße. Infolgedessen kann man Tragkörper mit sehr geringem Durchströmungswiderstand einsetzen. Es können problemlos erfindungsgemäße Filterelemente erzeugt werden, die je nach Bedarf Fremdstoffteilchen mit einer Größe von über 5 µm, vorzugsweise Fremdstoffteilchen mit einer Größe über 2 µm, höchst vorzugsweise Fremdstoffteilchen mit einer Größe über 0,5 µm, nahezu vollständig ausfiltern.

Die Erfindung wird nachfolgend anhand eines schematisiert zeichnerisch dargestellten Ausführungsbeispiels noch näher erläutert. Es zeigt:
- **Fig. 1**: einen Ausschnitt eines Filterelements im Schnitt, wobei die Schnittebene rechtwinklig zur Zuströmoberfläche des Filterelements ist;
- **Fig. 2**: eine Draufsicht auf einen Teilbereich des Filterelements von **Fig. 1**, gesehen in Blickrichtung des Pfeils II, wobei ein Zustand mit aufgebrachten ersten Fasern, aber vor Aufbringung der zweiten Fasern und einer Partikel-Beschichtungslage, gezeichnet ist.

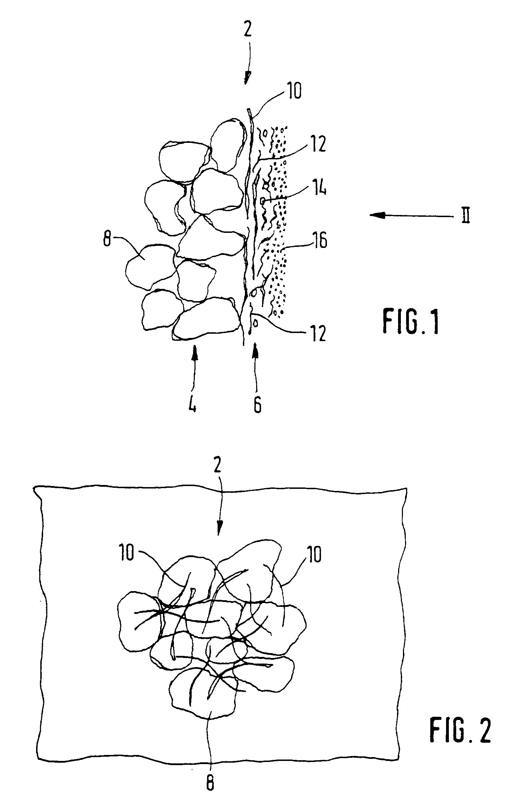

Das schematisch gezeichnete Filterelement 2 besteht aus einem Tragkörper 4, der an seiner in **Fig. 1** rechten Zuströmoberfläche für zu filterndes Fluid mit einer Faserbeschichtung 6 versehen ist. Der Tragkörper 4 besteht aus Polyethylen-Teilchen 8, die miteinander versintert sind, so daß sich ein poröser Tragkörper 4 mit einer durchschnittlichen Porengröße von z.B. 30 µm ergibt. Hierbei kann man in an sich bekannter Weise so arbeiten, daß für die Herstellung des Tragkörpers 4 ultrahochmolekulare Polyethylenteilchen und mittelmolekulare Polyethylenteilchen miteinander vermischt werden. Beim Sintervorgang schmelzen die niedriger molekularen Polyethylenteilchen stärker an und bilden ein verbindendes Gerüst für die hochmolekularen Polyethylenteilchen 8, die sich aber auch miteinander durch den Sintervorgang verbinden.

Die Faserbeschichtung 6 weist erste Fasern 10 auf, deren Länge erheblich größer als die durchschnittliche Porengröße des Tragkörpers 4 ist. Mit dieser Länge überbrücken die ersten Fasern 10 die offenen Poren des Tragkörpers 4 an seiner Zuströmseite. Ferner sind schematisiert eingezeichnete, zweite Fasern 12 erheblich geringerer Länge vorhanden, welche die Freiräume zwischen den ersten Fasern 10 auffüllen und eine, je nach Bestimmungs-Filterfunktion des Filterelements 2 mehr oder weniger dicke Faserbeschichtungslage bilden. Die Fasern 10, 12 sind aneinander und an die äußeren Polyethylenteilchen 8 an der Zuströmseite gebunden mittels eines Klebstoffs, der zeichnerisch wegen seines kleinen Volumens im fertigen Filterelementzustand nicht darstellbar ist. Als ein Beispiel unter mehreren möglichen wird der im Handel erhältliche Klebstoff MOWILITH (eingetragenes Warenzeichen der Hoechst AG) genannt, eine wäßrige Copolymerisatdispersion von Vinylacetat, Ethylen und Vinylchlorid. Die auf den Tragkörper 4 aufzubringende Suspension kann folgende Zusammenensetzung haben:
- 20 Gew.-%: Fasern bzw. Partikel
- 6 Gew.-%: MOWILITH
- 74 Gew.-%: Wasser

In der Faserbeschichtung 6 sind relativ wenig feinkörnige Partikel 14 verteilt.

Außen auf die Faserbeschichtung 6 ist eine Beschichtungslage aus feinkörnigen Partikeln 16, z.B. Gesteinsstaub, aufgebracht. Diese Partikel 16 sind ebenfalls mit Klebstoff aneinander und an die Faserbeschichtung 6 gebunden.

Wenn die Fasern 10,12 und/oder die Partikel 16 in einer Flüssigkeit dispergiert oder suspendiert aufgebracht werden, arbeitet man vorzugsweise mit einem Dispersionskleber, der in diese Flüssigkeit mit eingebracht wird.

In **Fig. 2** ist ein Faserbeschichtungszustand des Filterelements 2 gezeichnet nach Aufbringung der ersten Fasern 10, aber vor Aufbringung der zweiten Fasern 12. Wenn anschließend die zweiten Fasern 12 aufgebracht werden, füllen diese die in **Fig. 2** noch sichtbaren Zwischenräume zwischen den ersten Fasern 10 aus und bilden die in **Fig. 1** gezeichnete Faserbeschichtungslage 6.

## Patentansprüche

1. Filterelement (2), aufweisend einen eigenstabilen, porösen Tragkörper (4) und eine im Vergleich zu dem Tragkörper (4) feiner poröse Faserbeschichtung (6) des Tragkörpers (4) an dessen Zuströmoberfläche für zu filterndes Fluid, wobei die Faserbeschichtung (6) teils durch Faser/Faser-Bindung und teils durch Faser/Tragkörper-Bindung an den Tragkörper (4) gebunden ist,
**dadurch gekennzeichnet**,
daß die Faserbeschichtung (6) erste Fasern (10) aufweist, deren Länge größer als die durchschnittliche Porengröße des Tragkörpers (4) ist, und zweite Fasern (12) aufweist, deren Länge zur Schaffung der Feinporosität der Faserbeschichtung (6) deutlich geringer als die Länge der ersten Fasern (10) ist.

2. Filterelement nach Anspruch 1,
**dadurch gekennzeichnet**,
daß die ersten Fasern (10) als erste Faserbeschichtungslage aufgebracht sind und die zweiten Fasern (12) darauf als zweite Faserbeschichtungslage aufgebracht sind.

3. Filterelement nach einem Anspruch 1 oder 2,
**dadurch gekennzeichnet**,
daß mehrere Faserbeschichtungslagen mit vom Tragkörper (4) weg zunehmender Feinheit der Porosität aufgebracht sind.

4. Filterelement nach einem der Ansprüche 1 bis 3,
**dadurch gekennzeichnet**,
daß die Faser/Faser-Bindung und die Faser/Tragkörper-Bindung durch Klebstoff vorgenommen ist.

5. Filterelement nach einem der Ansprüche 1 bis 3,
**dadurch gekennzeichnet**,
daß die Faser/Faser-Bindung und die Faser/Tragkörper-Bindung durch Sintern vorgenommen ist.

6. Filterelement nach einem der Ansprüche 1 bis 5,
**dadurch gekennzeichnet**,
daß außenseitig auf der Faserbeschichtung (6) eine Beschichtungslage aus feinkörnigen Partikeln (16) aufgebracht ist.

7. Filterelement nach einem der Ansprüche 1 bis 6,
**dadurch gekennzeichnet**,
daß der Tragkörper (4) aus versinterten Kunststoffteilchen (8) aufgebaut ist.

## Claims

1. A filter element (2) having an inherently stable, porous supporting body (4) and, on its afflux surface for fluid to be filtered, a fibrous coating (6) of the supporting body (4) which is finer-pored than the supporting body (4), the fibrous coating (6) being bound to the supporting body (4) in part by a fiber/fiber bond and in part by a fiber/supporting body bond, characterized in that the fibrous coating (6) has first fibers (10) whose length is grater than the average pore size of the supporting body (4), and second fibers (12) whose length is clearly smaller than the length of the first fibers (10) to create the fine porosity of the fibrous coating (6).

2. The filter element of claim 1, characterized in that the first fibers (10) are applied as a first fibrous coating layer and the second fibers (12) are applied thereto as a second fibrous coating layer.

3. The filter element of claim 1 or 2, characterized in that a plurality of fibrous coating layers are applied with the fineness of porosity increasing away from the supporting body (4).

4. The filter element of any of claims 1 to 3, characterized in that the fiber/fiber bond and the fiber/supporting body bond are effected by adhesive.

5. The filter element of any of claims 1 to 3, characterized in that the fiber/fiber bond and the fiber/supporting body bond are effected by sintering.

6. The filter element of any of claims 1 to 5, characterized in that a coating layer consisting of fine-grained particles (16) is applied on the outside to the fibrous coating (6).

7. The filter element of any of claims 1 to 6, characterized in that the supporting body (4) is built up from sintered plastic particles (8).

## Revendications

1. Elément filtrant (2), présentant un corps porteur (4) poreux, de forme stable, et un revêtement fibreux (6) du corps porteur (4), plus fin que le corps porteur (4) et situé sur sa surface de flux entrant pour le fluide à filtrer, le revêtement fibreux (6) étant lié au corps porteur (4) pour partie par liaison fibres/fibres et pour partie par liaison fibres/corps porteur, **caractérisé** en ce que le revêtement fibreux (6) présente des premières fibres (10) dont la longueur est supérieure à la taille moyenne des pores du corps porteur (4), et des secondes fibres (12) dont la longueur est, afin de fournir la porosité fine du revêtement fibreux (6), nettement inférieure à la longueur des premières fibres (10).

2. Elément filtrant selon la revendication 1, **caractérisé** en ce que les premières fibres (10) sont apposées comme première couche de revêtement fibreux, et les secondes fibres (12) sont apposées sur les premières comme seconde couche de revêtement fibreux.

3. Elément filtrant selon la revendication 1 ou 2, **caractérisé** en ce qu'on appose plusieurs couches de revêtement fibreux avec une finesse de porosité augmentant en s'éloignant du corps porteur (4).

4. Elément filtrant selon une des revendications 1 à 3, **caractérisé** en ce que la liaison fibres/fibres et la liaison fibres/corps porteur sont effectuées avec un agent adhésif.

5. Elément filtrant selon une des revendications 1 à 3, **caractérisé** en ce que la liaison fibres/fibres et la liaison fibres/corps porteur sont effectuées par frittage.

6. Elément filtrant selon une des revendications 1 à 5, **caractérisé** en ce qu'une couche de revêtement constituée de particules (16) à grains fins est apposée sur le revêtement fibreux (6).

7. Elément filtrant selon une des revendications 1 à 6, **caractérisé** en ce que le corps porteur (4) est constitué de particules (8) de matière synthétique, agglomérées par frittage.
